Europäisches Patentamt

European Patent Office

Office européen des brevets

(19)

(11) Numéro de publication : **0 488 836 A1**

# (12) DEMANDE DE BREVET EUROPEEN

(21) Numéro de dépôt : **91402909.5**

(22) Date de dépôt : **30.10.91**

(51) Int. Cl.$^5$ : **B60R 11/02**

(30) Priorité : **29.11.90 FR 9015240**

(43) Date de publication de la demande :
**03.06.92 Bulletin 92/23**

(84) Etats contractants désignés :
**DE ES GB IT**

(71) Demandeur : **AUTOMOBILES PEUGEOT**
**75, avenue de la Grande Armée**
**F-75116 Paris (FR)**
(71) Demandeur : **AUTOMOBILES CITROEN**
**62 Boulevard Victor-Hugo**
**F-92200 Neuilly-sur-Seine (FR)**

(72) Inventeur : **Niez, Roland**
**11, Résidence Le Clos**
**F-91370 Verrières-le-Buisson (FR)**

(74) Mandataire : **Boivin, Claude**
**9, rue Edouard-Charton**
**F-78000 Versailles (FR)**

(54) **Dispositif de fixation d'une platine de radio-téléphone sur la planche de bord d'un véhicule automobile.**

(57)    Dispositif permettant la fixation d'une platine (10) de radio-téléphone sur une planche de bord de véhicule automobile (1) comportant une poignée (2).

Ce dispositif comprend :
— un premier élément (3) présentant une forme telle qu'il puisse se coincer entre la planche de bord (1) et la poignée (2),
— un deuxième élément (6) dont la forme lui permet de prendre appui sur la planche de bord et sur la poignée,
— un moyen (9) pour fixer l'élément (6) sur l'élément (3).

FIG. 2

EP 0 488 836 A1

La présente invention a pour objet un dispositif permettant la fixation d'une platine de radio-téléphone sur une planche de bord de véhicule automobile comportant une poignée.

Ce dispositif de fixation est caractérisé en ce qu'il comprend :
– un premier élément présentant une forme telle qu'il puisse se coincer entre la planche de bord et la poignée,
– un deuxième élément dont la forme lui permet de prendre appui sur la planche de bord et sur la poignée,
– un moyen pour fixer le deuxième élément sur le premier élément.

Ce dispositif présente l'avantage que la platine du radio-téléphone peut être fixée sur la planche de bord sans qu'il soit nécessaire de percer la planche de bord. Le démoulage de la platine est aisé et, une fois la platine retirée, aucun trou n'est visible.

On a décrit ci-après, à titre d'exemple non limitatif, un mode de réalisation du dispositif selon l'invention avec référence au dessin annexé dans lequel :

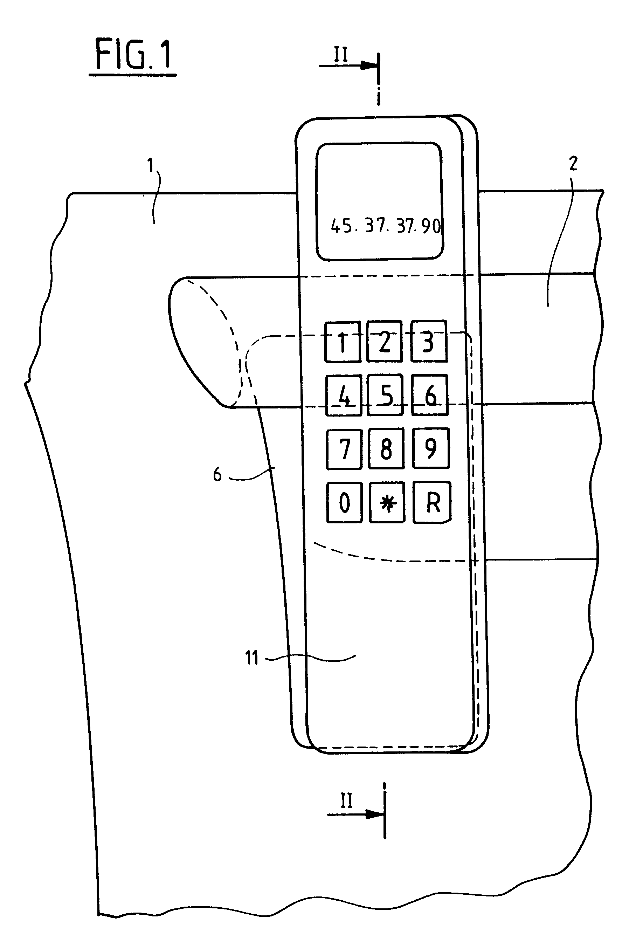

La Figure 1 est une vue en élévation montrant un radio-téléphone fixé sur une planche de bord;

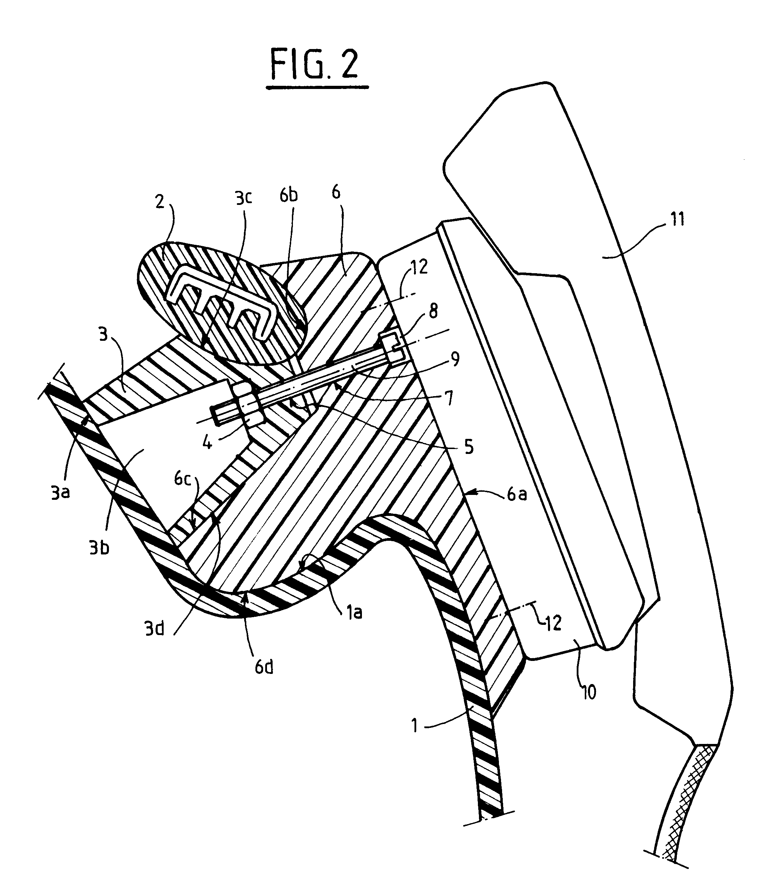

La Figure 2 est une vue en coupe transversale suivant II-II de la Figure 1.

Au dessin, on voit une planche de bord 1 qui comporte une poignée 2 s'étendant parallèlement à la planche de bord à une faible distance de celle-ci.

Un élément de fixation 3, de forme générale prismatique, peut se coincer entre la planche de bord et la poignée. Cet élément présente une face plane 3a destinée à s'appliquer sur la planche de bord et munie d'une cavité 3b au fond de laquelle est encastré un écrou 4 en regard d'un trou 5 débouchant sur la face opposée. Il présente également une face curviligne 3c par laquelle il prend appui sur la poignée 2.

Un deuxième élément de fixation 6 présente une face plane 6a et une face opposée dont le contour comporte essentiellement une partie curviligne 6b s'adaptant au contour de la poignée 2, une partie rectiligne 6c pouvant glisser sur une surface 3d de l'élément 3 et une partie curviligne 6d s'adaptant au contour 1a de la planche de bord. Cet élément de fixation est muni d'un trou 7 et d'un alésage 8 débouchant à l'extérieur et pouvant recevoir une vis 9.

La vis 9 traverse le trou 7 et sa tête se loge dans l'alésage 8 dont la profondeur est légèrememt supérieure à la hauteur de la tête de la vis. Elle traverse le trou 5 de la pièce 3 et se visse dans l'écrou 4. Lors de son serrage, elle tend à rapprocher l'un de l'autre l'élément 3 et l'élément 6 en les bloquant contre la poignée 2 et la surface 1a de la planche de bord 1. La platine 10 du radio téléphone 11 est fixée par des vis 12 sur l'élément de fixation 6.

**Revendications**

1. Dispositif permettant la fixation d'une platine (10) de radio-téléphone sur une planche de bord de véhicule automobile (1) comportant une poignée (2), caractérisé en ce qu'il comprend :
– un premier élément (3) présentant une forme telle qu'il puisse se coincer entre la planche de bord (1) et la poignée (2),
– un deuxième élément (6) dont la forme lui permet de prendre appui sur la planche de bord et sur la poignée,
– un moyen (9) pour fixer l'élément (6) sur l'élément (3).

2. Dispositif selon la revendication 1, caractérisé en ce que l'élément de fixation (3) a une forme générale prismatique et présente une face plane (3a) propre à s'appliquer sur la planche de bord (1) et une face curviligne (3c) par laquelle il peut prendre appui sur la poignée (2).

3. Dispositif de fixation selon la revendication 1 ou 2, caractérisé en ce que l'élément de fixation (6) présente une face d'appui plane (6a) et une face opposée dont le contour comporte une partie curviligne (6b) s'adaptant au contour de la poignée (2), une partie rectiligne (6c) pouvant glisser sur une surface (3d) de l'élément (3) et une partie curviligne (6d) s'adaptant au contour (1a) de la planche de bord (1).

4. Dispositif de fixation selon l'une quelconque des revendications précédentes, caractérisé en ce que le moyen pour fixer les deux éléments l'un à l'autre est constitué par une vis (9) traversant un trou (7) de l'élément (6), un trou (5) de l'élément (3), et vissée dans un écrou (4) encastré dans l'élément (3).

5. Dispositif selon la revendication 4, caractérisé en ce que l'élément (6) comporte un alésage (8) qui débouche à l'extérieur et dont la profondeur est supérieure à la hauteur de la tête de la vis (7).

# FIG.1

II →

45. 37. 37. 90

1

2

6

11

| 1 | 2 | 3 |
| 4 | 5 | 6 |
| 7 | 8 | 9 |
| 0 | * | R |

II →

# FIG. 2

EP 0 488 836 A1

Office européen
des brevets

**RAPPORT DE RECHERCHE EUROPEENNE**

Numero de la demande

EP 91 40 2909

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 507 016 (PHILIPS GLOEILAMPAENFABRIEKEN) <br> * le document en entier * <br> --- | 1 | B60R11/02 |
| A | EP-A-0 368 291 (NOKIA MOBILE PHONES) <br> * le document en entier * <br><br> ----- | 1 | |
| | | | **DOMAINES TECHNIQUES RECHERCHES (Int. Cl.5)** <br><br> B60R |

Le présent rapport a été établi pour toutes les revendications

| Lieu de la recherche | Date d'achèvement de la recherche | Examinateur |
|---|---|---|
| BERLIN | 21 FEVRIER 1992 | M. Standring |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P0402)

5